# EUROPÄISCHE PATENTSCHRIFT

(11) **EP 3 049 214 B1**
(45) Veröffentlichungstag und Bekanntmachung des Hinweises auf die Patenterteilung: **03.04.2019**
(21) Anmeldenummer: 14759172.1
(22) Anmeldetag: 04.09.2014
(51) Int. Cl.: B23Q 3/155, B23Q 17/20, G01N 3/40, G01N 3/42

(54) **WERKZEUGMASCHINE MIT HÄRTEMESSEINRICHTUNG**
MACHINE TOOL COMPRISING A HARDNESS TESTING DEVICE
MACHINE-OUTIL MUNIE D'UN DISPOSITIF DE MESURE DE DURETÉ

(30) Priorität: 23.09.2013 DE 102013015685
(43) Veröffentlichungstag der Anmeldung: 03.08.2016
(73) Patentinhaber: MAN Energy Solutions SE, 86153 Augsburg (DE)
(72) Erfinder: FISCHER, Jochen, 86441 Zusmarshausen (DE); BRÖLL, Martin, 86863 Langenneufnach (DE)
(86) Internationale Anmeldenummer: PCT/EP2014/068787
(87) Internationale Veröffentlichungsnummer: WO 2015/039875

(56) Entgegenhaltungen:
- EP-A1- 2 009 388
- EP-A2- 0 461 740
- EP-A2- 1 783 479
- DE-A1-102011 011 685
- FR-A1- 2 343 240
- US-A- 4 040 291

## Beschreibung

Die Erfindung betrifft eine Werkzeugmaschine gemäß dem Oberbegriff des Anspruchs 1.

Der grundsätzliche Aufbau einer Werkzeugmaschine ist aus der Praxis hinlänglich bekannt. So verfügt eine Werkzeugmaschine über eine Werkstückaufnahme zur Aufnahme eines auf der Werkzeugmaschine zu bearbeitenden Werkstücks. Ferner verfügt eine Werkzeugmaschine über eine Werkzeugaufnahme zur Aufnahme eines für die Werkstückbearbeitung benötigten Werkzeugs, wobei Werkzeuge der Werkzeugmaschine typischerweise in einem Werkzeugmagazin der Werkzeugmaschine bereitgehalten werden. Die Werkzeugaufnahme kann bei Ausführung eines automatischen Werkzeugwechsels automatisiert ein Werkzeug aus dem Werkzeugmagazin entnehmen und im Gegenzug hierzu ein nicht mehr benötigtes Werkzeug im Werkzeugmagazin positionieren.

Aus der Praxis ist es weiterhin bereits bekannt, nach der Bearbeitung des Werkstücks auf der Werkzeugmaschine das Werkstück von der Werkzeugmaschine zu entnehmen und zum Beispiel einer Werkstücküberprüfung zu unterziehen. Hierbei kann an dem Werkstück eine Härtemessung durchgeführt werden.

Aus der Praxis sind bereits Härtemesseinrichtungen bekannt, die nach dem UCI-Verfahren arbeiten. Beim UCI (Ultrasonic Contact Impedance)-Verfahren wird eine UCI-Härtemesseinrichtung manuell auf das Werkstück aufgesetzt und mit einer Kraft manuell gegen das Werkstück gedrückt. Bei Erreichen einer Nennprüfkraft wird der Prüfeindruck durch den sogenannten Vickers-Diamanten elektronisch ausgemessen und der Härtemesswert kann sofort angezeigt werden.

Dieses UCI-Verfahren wird an dieser Stelle nur repräsentativ für eine Härtemessung genannt, auch andere Verfahren sind denkbar.

Die Härtemessung erfolgt bisher außerhalb des Bearbeitungsprozesses, manuell im UCI-Verfahren oder auf anderen automatisierten Prüfvorrichtungen. Dies erfordert einen erhöhten Aufwand an Zeit und damit verbundene Kosten, und schränkt im manuellen Prozess die Reproduzierbarkeit ein. Die UCI-Härtemesseinrichtung wird demnach von einem Werker manuell auf das Werkstück aufgesetzt und mit einer Kraft manuell gegen das Werkstück gedrückt.

Aus der EP 0 461 740 A2, aus der FR 2 343 240 A1, aus der EP 1 783 479 A2 und der US 4 040 291 A sind Werkzeugmaschinen nach dem Stand der Technik bekannt.

Hiervon ausgehend liegt der vorliegenden Erfindung die Aufgabe zugrunde, eine neuartige Werkzeugmaschine zu schaffen, insbesondere eine Funktionserweiterung der Werkzeugmaschine zu schaffen, derart, dass eine automatisierte Härteprüfung während de Bearbeitungsprozesses möglich ist.

Diese Aufgabe wird durch eine Werkzeugmaschine nach Anspruch 1 gelöst. Erfindungsgemäß ist in die Werkzeugmaschine eine Härtemesseinrichtung integriert, mit Hilfe derer automatisiert am Werkstück eine Härtemessung durchführbar ist. Ferner ist in die Werkzeugaufnahme oder maschinenseitig in der Spanneinrichtung für die Werkzeugaufnahme eine Druckmesseinrichtung oder eine Kraftmesseinrichtung integriert, mit Hilfe derer die Kraft, mit welcher die Härtemesseinrichtung gegen das Werkstück drückbar ist, automatisch messbar ist. Ein hierbei gewonnener Kraftmesswert ist vorzugsweise automatisch an eine Auswerteinrichtung übertragbar, wobei die Auswerteinrichtung die Werkzeugachsen derart ansteuert, dass der Kraftmesswert einem Kraftsollwert entspricht. Durch die Regelung der Kraft, mit welcher die Härtemesseinrichtung gegen das Werkstück drückt, kann die Qualität der Härtemessung weiter gesteigert werden.

Die Härtemesseinrichtung ist vorzugsweise eine UCI-Härtemesseinrichtung, die mit Hilfe einer Werkzeugaufnahme automatisch auf das Werkstück aufsetzbar und mit einer definierten Kraft automatisch gegen das Werkstück drückbar ist. Die Härtemesseinrichtung kann mit Hilfe der Werkzeugaufnahme in einer Werkzeugspindel oder in einem Werkzeugrevolver automatisch in einem definierten Winkel auf das Werkstück aufgesetzt und automatisch mit einer definierten Kraft gegen das Werkstück gedrückt werden. Hierdurch wird die gesamte Härtemessung reproduzierbar, automatisiert und prozessintegriert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

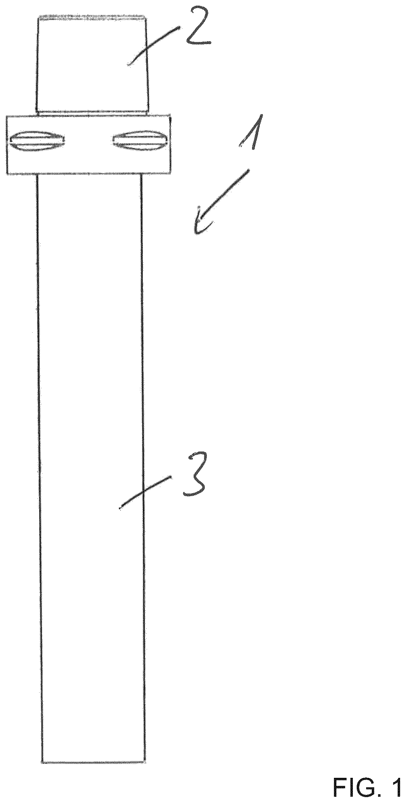

- Fig. 1:: eine UCI-Härtemesseinrichtung für den erfindungsgemäßen Einsatz in einer Werkzeugmaschine.

Die hier vorliegende Erfindung betrifft ein Messmittel für eine Werkzeugmaschine. Der grundsätzliche Aufbau eines Härtemessgerätes und einer Werkzeugmaschine ist dem hier angesprochenen Fachmann geläufig.

An dieser Stelle sei darauf hingewiesen, dass eine Werkzeugmaschine eine Werkstückaufnahme zur Aufnahme eines zu bearbeitenden Werkstücks aufweist. Bei der Werkstückaufnahme kann es sich zum Beispiel um ein sogenanntes Spannfutter handeln, in welchem das zu bearbeitende Werkstück fest eingespannt werden kann.

Eine Werkzeugmaschine verfügt weiterhin vorzugsweise über ein Werkzeugmagazin, in welchem unterschiedliche Werkzeuge der Werkzeugmaschine bereitgehalten werden.

Darüber hinaus verfügt eine Werkzeugmaschine über eine Werkzeugaufnahme zur Aufnahme eines für die Werkstückbearbeitung benötigten Werkzeugs, wobei bei einem automatischen Werkzeugwechsel die Werkzeugaufnahme ein neues, zur Bearbeitung des Werkstücks benötigtes Werkzeug aus dem Werkzeugmagazin entnehmen und im Gegenzug hierzu ein nicht mehr benötigtes Werkzeug im Werkzeugmagazin positionieren kann.

Typischerweise ist die Werkzeugaufnahme und damit das in der Werkzeugaufnahme aufgenommene Werkzeug relativ zum Werkstück mit Hilfe einer Werkzeugspindel verlagerbar.

Mit der hier vorliegenden Erfindung wird vorgeschlagen, in die Werkzeugmaschine eine Härtemesseinrichtung zu integrieren, mit Hilfe derer automatisch am Werkstück eine Härtemessung durchführbar ist. Bei der in die Werkzeugmaschine integrierten Härtemesseinrichtung handelt es sich vorzugsweise um eine UCI-Härtemesseinrichtung, die nach dem UCI (Ultrasonic Contact Impedance)-Verfahren eine Härtemessung am Werkstück vornimmt.

Die Härtemesseinrichtung ist vorzugsweise mit Hilfe der Werkzeugmaschine automatisch in einem definierten Winkel auf das Werkstück aufsetzbar und mit einer definierten Kraft automatisch gegen das Werkstück drückbar. In diesem Zusammenhang kann vorgesehen sein, dass die Härtemesseinrichtung zusammen mit den Werkzeugen der Werkzeugmaschine in einem Werkzeugmagazin aufgenommen ist. Im Sinne eines automatischen Werkzeugswechsels kann dann die Werkzeugaufnahme zur Durchführung einer Härtemessung die Härtemesseinrichtung automatisch aus dem Werkzeugmagazin entnehmen und im Gegenzug hierzu ein zur Härtemessung nicht mehr benötigtes Werkzeug im Werkzeugmagazin positionieren.

Ein bei der automatischen Härtemessung gewonnener Härtemesswert ist automatisch von der Härtemesseinrichtung an eine Auswerteeinrichtung übertragbar, nämlich zur Speicherung und/oder Auswertung des Härtemesswerts, wobei die in die Werkzeugmaschine integrierte Härtemesseinrichtung den Härtemesswert vorzugsweise kabellos per Funk an die Auswerteeinrichtung überträgt.

Natürlich ist es auch denkbar und möglich, z.Bsp. Messwerte im Messkopf, also in der Sonde zu speichern und anschließend zu übertragen. Es kommt darauf an, dass die Werte innerhalb der Werkzeugmaschine übertragen werden.

Wie bereits ausgeführt, kann die Härtemesseinrichtung mit Hilfe der Werkzeugaufnahme mit einer definierten Kraft automatisch an das Werkstück angedrückt werden. In diesem Zusammenhang kann vorgesehen sein, dass in die Werkzeugaufnahme weiterhin eine Druckmesseinrichtung oder eine Kraftmesseinrichtung integriert ist, mit Hilfe derer die Kraft, mit welcher die Härtemesseinrichtung gegen das Werkstück gedrückt wird, automatisch gemessen werden kann. In diesem Zusammenhang ist dann vorzugsweise vorgesehen, dass ein hierbei gewonnener Kraftmesswert automatisch an die Auswerteeinrichtung übertragen wird, die dann die Werkzeugaufnahme derart ansteuert, dass der Kraftmesswert einem KraftSollwert entspricht und so die Härtemesseinrichtung mit der definierten Kraft gegen das Werkstück drückt.

Wie oben bereits ausgeführt, dient eine Werkzeugspindel der Verlagerung der Werkzeugaufnahme relativ zum Werkstück. Demnach kann die in der Werkzeugaufnahme aufgenommene Härtemesseinrichtung zusammen mit der Werkzeugaufnahme über die Werkzeugspindel relativ zum Werkstück verlagert und mit einem definierten Winkel auf das Werkstück aufgesetzt werden. Mit anderen Worten: Die Härtemesseinrichtung kann in definierten Achsen, in Abhängigkeit von der Werkzeugmaschine, relativ zum Werkstück bewegt werden.

Bedingt dadurch, dass die Härtemesseinrichtung in die Werkzeugmaschine integriert ist, kann die Prozesssicherheit der Härtemessung erhöht werden. Ferner ist die gesamte Härtemessung reproduzierbar, da Fehler durch manuelle Bedienung vermieden werden können. Darüber hinaus kann eine Härtemessung innerhalb kürzerer Zeit auch zwischen den Bearbeitungsschritten durchgeführt werden.

Fig. 1 zeigt stark schematisiert eine in die Werkzeugmaschine integrierte UCI-Härtemesseinrichtung 1. Ein Messkopf 3 der Härtemesseinrichtung 1 ist mit einem definierten Winkel und einer definierten Kraft gegen das Werkstück drückbar.

Ein dem Messkopf 3 gegenüberliegender Abschnitt 2 der Härtemesseinrichtung 1 dient der Aufnahme und Halterung der Härtemesseinrichtung 1 in einer nicht gezeigten Werkzeugaufnahme der ebenfalls nicht gezeigten Werkzeugmaschine.

### Bezugszeichenliste

- 1: Härtemesseinrichtung
- 2: Abschnitt, Werkzeugaufnahme
- 3: Messkopf

## Patentansprüche

1. Werkzeugmaschine, mit einer Werkstückaufnahme zur Aufnahme eines zu bearbeitenden Werkstücks, und mit einer Werkzeugaufnahme (2) zur Aufnahme eines für die Werkstückbearbeitung benötigten Werkzeugs, wobei in die Werkzeugmaschine eine Härtemesseinrichtung (1) integriert ist, mit Hilfe derer automatisiert am Werkstück eine Härtemessung durchführbar ist **dadurch gekennzeichnet, dass** die Härtemesseinrichtung (1) mit Hilfe der Werkzeugaufnahme (2) automatisch auf das Werkstück aufsetzbar und mit einer definierten Kraft automatisch gegen das Werkstück drückbar ist, und dass in die Werkzeugaufnahme (2) oder maschinenseitig in eine Spanneinrichtung für die Werkzeugaufnahme eine Druckmesseinrichtung oder eine Kraftmesseinrichtung integriert ist, mit Hilfe derer die Kraft, mit welcher die Härtemesseinrichtung (1) gegen das Werkstück drückbar ist, automatisch messbar ist.

2. Werkzeugmaschine nach Anspruch 1, **dadurch gekennzeichnet, dass** die in die Werkzeugmaschine integrierte Härtemesseinrichtung (1) eine UCI-Härtemesseinrichtung ist.

3. Werkzeugmaschine nach Anspruch 1 oder 2, **dadurch gekennzeichnet, dass** ein von der Härtemesseinrichtung (1) gewonnener Härtemesswert automatisch an eine Auswerteinrichtung zur Speicherung und/oder Auswertung übertragbar ist.

4. Werkzeugmaschine nach Anspruch 3, **dadurch gekennzeichnet, dass** die Härtemesseinrichtung (1) den Härtemesswert kabellos per Funk an die Auswerteinrichtung überträgt.

5. Werkzeugmaschine nach einem der Ansprüche 1 bis 4, **dadurch gekennzeichnet, dass** ein hierbei gewonnener Kraftmesswert automatisch an eine Auswerteinrichtung übertragbar ist, wobei die Auswerteinrichtung die Werkzeugaufnahme (2) derart ansteuert, dass der Kraftmesswert einem Kraftsollwert entspricht.

6. Werkzeugmaschine nach einem der Ansprüche 1 bis 5, **dadurch gekennzeichnet, dass** die Härtemesseinrichtung (1) zusammen mit Werkzeugen in einem Werkzeugmagazin aufgenommen ist, und dass die Härtemesseinrichtung (1) im Sinne eines automatischen Werkzeugwechsels automatisch aus dem Werkzeugmagazin entnehmbar und von der Werkzeugaufnahme (2) aufnehmbar sowie umgekehrt automatisch von der Werkzeugaufnahme (2) entnehmbar und im Werkzeugmagazin aufnehmbar ist.

7. Werkzeugmaschine nach einem der Ansprüche 1 bis 6, **dadurch gekennzeichnet, dass** die Härtemesseinrichtung (1) zusammen mit der dieselbe aufnehmenden Werkzeugaufnahme (2) automatisch über eine Werkzeugmaschinenachse relativ zum Werkstück verlagerbar und mit einem definierten Winkel auf das Werkstück aufsetzbar ist.

## Claims

1. A machine tool, having a workpiece holder for receiving a workpiece to be machined, and having a tool holder (2) for holding a tool needed for the workpiece machining, wherein in the machine tool a hardness measuring device (1) is integrated, with the help of which a hardness measurement is performable on the workpiece in an automated manner, **characterized in that** the hardness measuring device (1) can be automatically placed onto the workpiece with the help of the tool holder (2) and automatically pressed against the workpiece with a defined force, and **in that** in the tool holder (2) or on the machine side in a clamping device for the tool holder a pressure measuring device or a force measuring device is integrated, with the help of which the force, with which the hardness measuring device (1) can be pressed against the workpiece, is automatically measurable.

2. The machine tool according to Claim 1, **characterized in that** the hardness measuring device (1) integrated in the machine tool is a UCI hardness measuring device.

3. The machine tool according to Claim 1 or 2, **characterized in that** a hardness measurement value obtained from the hardness measuring device (1) is automatically transmittable to an evaluation device for storage and/or evaluation.

4. The machine tool according to Claim 3, **characterized in that** the hardness measuring device (1) transmits the hardness measurement value wirelessly by radio to the evaluation device.

5. The machine tool according to any one of the Claims 1 to 4, **characterized in that** a force measurement value obtained in the process is automatically transmittable to a valuation device, wherein the valuation device activates the tool holder (2) in such a manner that the force measurement value corresponds to a force set point value.

6. The machine tool according to any one of the Claims 1 to 5, **characterized in that** the hardness measuring device (1) together with tools is received in a tool magazine and **in that** the hardness measuring device (1) in the sense of an automatic tool change can be automatically taken out of the tool magazine and received by the tool holder (2) as well as conversely be automatically taken out of the tool holder (2) and received in the tool magazine.

7. The machine tool according to any one of the Claims 1 to 6, **characterized in that** the hardness measuring device (1) together with the tool holder (2) receiving the same is automatically moveable relative to the workpiece via a machine tool axis and placed onto the workpiece with a defined angle.

## Revendications

1. Machine-outil, comportant un support de pièce à usiner pour recevoir une pièce à usiner, et comportant un support d'outil (2) pour recevoir un outil nécessaire pour l'usinage de pièce, dans laquelle un dispositif de mesure de dureté (1) est intégré dans la machine-outil, à l'aide duquel une mesure de dureté peut être effectuée de manière automatisée sur la pièce à usiner, **caractérisé en ce que** le dispositif de mesure de dureté (1) peut être posé automatiquement sur a pièce à usiner à l'aide du support d'outil (2) et peut être pressé avec une force définie automatiquement contre la pièce à usiner, et **en ce que** dans le support d'outil (2) ou du côté de la machine dans le dispositif de serrage pour le support d'outil un dispositif de mesure de pression ou un dispositif d mesure de force est intégré, à l'aide duquel la force, avec laquelle le dispositif de mesure de dureté (1) peut être pressé contre la pièce à usiner, peut être mesurée automatiquement.

2. Machine-outil selon la revendication 1, **caractérisé en ce que** le dispositif de mesure de dureté (1) intégré dans la machine-outil est un dispositif de mesure de dureté UCI.

3. Machine-outil selon la revendication 1 ou 2, **caractérisé en ce qu'**une valeur de mesure de dureté extraite du dispositif de mesure de dureté (1) peut être transmise automatiquement à un dispositif d'évaluation à des fins de mémorisation et/ou évaluation.

4. Machine-outil selon la revendication 3, **caractérisé en ce que** le dispositif de mesure de dureté (1) transmet la valeur de mesure de dureté sans fil par radio au dispositif d'évaluation.

5. Machine-outil selon une des revendications 1 à 4, **caractérisé en ce qu'**une valeur de mesure de force extraite dans ce cadre peut être transmise automatiquement à un dispositif d'évaluation, dans laquelle le dispositif d'évaluation commande le support d'outil (2) de telle sorte que la valeur de mesure de force corresponde à une valeur de consigne de force.

6. Machine-outil selon une des revendications 1 à 5, **caractérisé en ce que** le dispositif de mesure de dureté (1) est renfermé conjointement aux outils dans un magasin d'outils, et **en ce que** le dispositif de mesure de dureté (1) peut être retiré automatiquement du magasin d'outil dans l'optique d'un remplacement d'outil automatique et peut être renfermé par e support d'outil (2) ainsi que retiré automatiquement du magasin d'outil (2) et peut être renfermé dans le magasin d'outil.

7. Machine-outil selon une des revendications 1 à 6, **caractérisé en ce que** le dispositif de mesure de dureté (1) peut être déplacé automatiquement avec le support d'outil (2) renfermant celui-ci par l'intermédiaire d'un axe de machine-outil par rapport à la pièce à usiner et peut être posé avec un angle défini sur la pièce à usiner.
